# EUROPÄISCHE PATENTSCHRIFT

(11) **EP 3 877 676 B1**
(45) Veröffentlichungstag und Bekanntmachung des Hinweises auf die Patenterteilung: **10.08.2022**
(21) Anmeldenummer: 19783522.6
(22) Anmeldetag: 07.10.2019
(51) Int. Cl.: F16H 61/02, F16H 61/00

(54) **SYSTEMDRUCKVENTIL FÜR EIN HYDRAULIKSYSTEM EINES KRAFTFAHRZEUG-GETRIEBES**
SYSTEM PRESSURE VALVE FOR A HYDRAULIC SYSTEM OF A MOTOR VEHICLE TRANSMISSION
SOUPAPE DE PRESSION POUR SYSTÈME HYDRAULIQUE D'UNE TRANSMISSION DE VÉHICULE AUTOMOBILE

(30) Priorität: 09.11.2018 DE 102018219113
(43) Veröffentlichungstag der Anmeldung: 15.09.2021
(73) Patentinhaber: ZF Friedrichshafen AG, 88046 Friedrichshafen (DE)
(72) Erfinder: HABERSTOCK, Alexander, 88212 Ravensburg (DE); HERRMANN, Markus, 88175 Scheidegg (DE)
(74) Vertreter: ZF Friedrichshafen AG
(86) Internationale Anmeldenummer: PCT/EP2019/077026
(87) Internationale Veröffentlichungsnummer: WO 2020/094310

(56) Entgegenhaltungen:
- WO-A1-2017/157606
- WO-A2-2012/112778
- DE-A1- 10 041 386

## Beschreibung

Die Erfindung betrifft ein Systemdruckventil für ein Hydrauliksystem eines Kraftfahrzeug-Getriebes. Weitere Ansprüche sind auf ein Hydrauliksystem mit dem Systemdruckventil, ein Kraftfahrzeug-Getriebe mit dem Hydrauliksystem sowie auf ein Kraftfahrzeug mit dem Kraftfahrzeug-Getriebe gerichtet.

Es sind beispielsweise aus der DE 100 41 386 A1 Hydrauliksysteme insbesondere für Automatikgetriebe von Kraftfahrzeugen bekannt, die einen Hochdruckkreis (primärer Systemdruckkreis) und einen Niederdruckkreis (sekundärer Systemdruckkreis) aufweisen. Ein derartiges Hydrauliksystem umfasst typischerweise zwei Pumpen, welche, wie beispielsweise aus der DE 10 2004 025 764 A1 bekannt, als doppelhubige Flügelzellenpumpe mit festem (drehzahlabhängigen) Fördervolumen ausgeführt sein können. Jede Pumpe wird dabei jeweils einem der beiden Systemdruckkreise (Hoch- bzw. Niederdruck) zugeordnet. Das Funktionsprinzip beruht darauf, dass bei Ölmangel diejenige Pumpe, die dem Niederdruckkreis zugeordnet ist (Sekundärpumpe), auf Hochdruck geschaltet wird und in den Hochdruckkreis einspeisen kann. Sobald der Hochdruckkreis gesättigt ist, wird der Druck der Sekundärpumpe wieder auf ein niedrigeres Druckniveau abgesenkt. Das Hydrauliksystem kann dazu selbstregelnd über eine Ventillogik ausgeführt sein. Um den Druck sowohl im Hochdrucckreis als auch im Niederdruckkreis zu regeln, werden zwei Druckbegrenzungsventile benötigt. Diese Ventile regeln den Druck, indem Sie das zu viel geförderte Öl der Pumpen ablassen. Dieses Öl wird typischerweise direkt in einen Ansaugbereich der Pumpen zurückgeführt, um das Befüllverhalten bzw. die Kavitationsneigung der Pumpe(n) bei hohen Drehzahlen (=hohe Fördermengen) zu verbessern. Weitere derart ausgebildete Hydrauliksysteme sind aus der WO 20212/112 778 A2 oder der WO 2017/157 606 A1, auf welcher die zweiteilige Anspruchsfassung basiert, bekannt.

Ein derartiges System kann jedoch die im Folgenden beschriebenen Nachteile aufweisen. So kann sich eine Sättigung des Sekundärkreises im Vergleich zu einem Ein-Kreis-Pumpensystem zu höheren Pumpendrehzahlen hin verschieben, da die Übermenge des Hochdruckkreises in den Ansaugbereich der Pumpen geleitet wird und nicht dem Sekundärkreis zur Verfügung steht. Dadurch, dass beide Ventile ihre Übermenge zur Pumpensaugseite leiten, muss weiterhin ein hydraulisches Schaltgerät ("Ventilschieberkasten") des Hydrauliksystems in der Regel derart konstruiert werden, dass beide Ventile direkt am Ansaugbereich der Pumpen liegen, was konstruktive Freiheitsgrade einschränkt. Außerdem muss das Druckbegrenzungsventil für den Hochdruckkreis relativ lang ausgeführt werden, damit die Funktionen umgesetzt werden können, was zu höheren Kosten und zu weiteren konstruktiven Einschränkungen führen kann.

Eine Aufgabe der vorliegenden Erfindung kann daher darin gesehen werden, ein kostengünstiges Druckbegrenzungsventil mit reduziertem Bauraum bereitzustellen, durch welches ermöglicht wird, dass ein Niederdruckkreis eines Hydrauliksystems besser versorgt wird, und dass im Sinne einer Erhöhung von Freiheitsgraden Systemdruckventile in einfacherer Weise innerhalb eines hydraulischen Schaltgeräts konstruktiv angeordnet werden können.

Die Aufgabe wird gelöst durch ein Systemdruckventil nach Anspruch 1.

Vorteilhafte Ausführungsformen sind Gegenstand der abhängigen Ansprüche.

Gemäß der vorliegenden Erfindung wird vorgeschlagen, einen sekundären Systemdruckkreis eines Hydrauliksystems eines Kraftfahrzeug-Getriebes früher zu sättigen, indem eine Übermenge aus einem primären Systemdruckkreis nicht zu einer Saugaufladung geleitet wird, sondern in den sekundären Systemdruckkreis. Dies kann mittels eines für diese Funktion eingerichteten, erfindungsgemäßen Systemdruckventils für den primären Systemdruckkreis erfolgen. Neben der besseren Versorgung des sekundären Systemdruckkreises bringt diese Umgestaltung weiterhin den Vorteil, dass das Systemdruckventil des primären Systemdruckkreises (primäres Systemdruckventil) nicht mehr an den Saugbereich der Pumpe angebunden werden muss. Nur ein Systemdruckventil des sekundären Systemdruckkreises (sekundäres Systemdruckventil) übernimmt die Funktion, die Übermenge in die Saugaufladung der Pumpe zu leiten. Hierdurch entstehen Freiheitsgrade in der konstruktiven Anordnung, da das primäre Systemdruckventil mehr oder weniger beliebig in einem hydraulischen Schaltgerät angeordnet werden kann. Besonders vorteilhaft kann das primäre Systemdruckventil in der Nähe des sekundären Systemdruckventils angeordnet sein, da es in dessen Ölkreis (den sekundären Systemdruckkreis) einspeisen kann. In diesem Sinne wird gemäß einem ersten Aspekt der Erfindung ein Systemdruckventil für ein Hydrauliksystem eines Kraftfahrzeug-Getriebes bereitgestellt. Bei dem Systemdruckventil kann es sich insbesondere um ein primäres Systemdruckventil handeln, d.h. es kann einem primären Systemdruckkreis zugeordnet werden, um in diesem einen vorgesehenes Soll-Druckniveau einzustellen und bei dessen Erreichung oder Überschreitung Hydraulik-Flüssigkeit, insbesondere Öl, aus dem primären Systemdruckkreis abzuführen.

Das Systemdruckventil umfasst ein Ventilgehäuse, eine Kolbenstange, einen ersten Eingang, einen zweiten Eingang, einen ersten Ausgang, einen zweiten Ausgang und einen dritten Ausgang. Eine Primärpumpe des Hydrauliksystems kann mit dem ersten Eingang verbunden werden. Eine Sekundärpumpe des Hydrauliksystems kann mit dem zweiten Eingang verbunden werden. Ein primärer Systemdruckkreis des Hydrauliksystems kann mit dem ersten Ausgang und mit dem zweiten Ausgang verbunden werden. Ein sekundärer Systemdruckkreis des Hydrauliksystems kann mit dem dritten Ausgang verbunden werden.

Gemäß der vorliegenden Erfindung ist das Systemdruckventil eingerichtet, die Kolbenstange innerhalb des Ventilgehäuses in eine erste Schaltstellung, in eine zweite Schaltstellung und in eine dritte Schaltstellung zu verstellen.

Gemäß der vorliegenden Erfindung ist in der ersten Schaltstellung der dritte Ausgang weder mit dem ersten Eingang noch mit dem zweiten Eingang verbunden. Unter dem Merkmal "verbunden" ist insbesondere zu verstehen, dass die jeweils miteinander verbundenen Elemente hydraulisch leitend miteinander verbunden sind, d.h. dass eine Hydraulik-Flüssigkeit, insbesondere Öl, von dem einen Element zu dem anderen Element fließen kann und ggfs. umgekehrt. Der erste Eingang kann mit dem ersten Ausgang verbunden sein. Weiterhin kann der zweite Eingang mit dem zweiten Ausgang verbunden sein. Dies kann insbesondere unabhängig von der jeweiligen Schaltstellung der Kolbenstange der Fall sein, d.h. die genannten Verbindungen können sowohl in der ersten Schaltstellung, in der zweiten Schaltstellung, der dritten Schaltstellung sowie in Zwischenstellungen zwischen den genannten Schaltstellungen bestehen. Somit kann in der ersten Schaltstellung der primäre Systemdruckkreis durch die Primärpumpe mit einer ersten Ölflut und durch die Sekundärpumpe mit einer sekundären Ölflut gespeist werden, um Druck innerhalb des primären Systemdruckkreises aufzubauen. Der primäre Systemdruckkreis ist noch nicht gesättigt (ein Soll-Druckniveau innerhalb des primären Systemdruckkreises, ist noch nicht erreicht) und der sekundäre Systemdruckkreis wird nicht versorgt, da keine Verbindung zwischen der Primärpumpe und der Sekundärpumpe über den ersten Eingang und den zweiten Eingang (eingangsseitig) und dem dritten Ausgang (ausgangsseitig) besteht.

Gemäß der vorliegenden Erfindung ist in der zweiten Schaltstellung der zweite Eingang mit dem dritten Ausgang verbunden. Reicht die Fördermenge der Primärpumpe und der Sekundärpumpe aus, um das Soll-Druckniveau innerhalb des primären Systemdruckkreises zu erreichen, kann sich der Ventilkolben aufgrund eines Kräfteungleichgewichts in die zweite Schaltstellung bewegen. Dadurch kann Öl der Sekundärpumpe, das nicht zur Sättigung des primären Systemdruckkreises benötigt wird, über die Verbindung zwischen dem zweiten Eingang und dem dritten Ausgang in den Sekundärkreis geleitet werden, und das Druckniveau im primären Systemdruckkreis kann gehalten werden.

Wenn die Fördermenge (durch Erhöhung der Pumpendrehzahl) der Primärpumpe und der Sekundärpumpe so weit erhöht, dass die Primärpumpe allein den primären Systemdruckkreis sättigen kann, so kann das primäre Systemdruckventil den Steuerkolben in die dritte Schaltstellung verstellen, so dass zu viel gefördertes Öl des primären Systemdruckkreises innerhalb des Systemdruckventils mit einer Fördermenge der Sekundärpumpe zusammengeführt wird. Gemäß der vorliegenden Erfindung ist in der dritten Schaltstellung der dritte Ausgang sowohl mit dem ersten Eingang als auch mit dem zweiten Eingang verbunden.

Wird die Pumpendrehzahl nochmals gesteigert, kann die Fördermenge ausreichen, um den sekundären Systemdruckkreis zu sättigen. Ein weiter unten näher beschriebenes sekundäres Systemdruckventil des sekundären Systemdruckkreises kann dann in Regelung gelangen, indem es eine Übermenge Öl innerhalb des sekundären Systemdruckkreises über eine Leitung zu einer Pumpensaugseite zurückleitet. Damit sind der primäre und der sekundäre Systemdruckkreis gesättigt.

Ein erster Kolben der Kolbenstange des Systemdruckventils des primären Systemdruckkreises kann im Bereich einer ersten Stirnseite der Kolbenstange und des primären Systemdruckventils angeordnet sein. Ein zweiter Kolben kann in einer axialen Richtung des Systemdruckventils mit Abstand zu dem ersten Kolben an der Kolbenstange angeordnet sein. Weiterhin kann sich der zweite Kolben in radialer Richtung des primären Systemdruckventils bis zu einem ersten Abschnitt einer Führungsfläche erstrecken, die durch den Ventilkörper des Systemdruckventils gebildet wird.

In einer Ausführungsform ist die Kolbenstange mittels eines Rückstellelements in der ersten Schaltstellung vorgespannt. Das Rückstellelement kann eine Vorspannkraft erzeugen. Durch die Rückstellkraft tendiert die Kolbenstange dazu, in ihrer ersten Schaltstellung zu verbleiben. Insbesondere kann durch die Vorspannkraft die Kolbenstange in ihrer ersten Schaltstellung verbleiben, solange der hydraulische Druck unterhalb des ersten Grenzwerts liegt. Beispielsweise kann der erste Kolben topfförmig ausgestaltetet sein. Der topfförmige Kolben kann einen Innenraum und eine innere Fläche, z.B. eine kreisförmige Fläche bilden. Die innere Fläche kann senkrecht zu einer möglichen Verstellrichtung der Kolbenstange verlaufen. Das Rückstellelement kann beispielsweise eine Feder umfassen. Die Feder kann z.B. innerhalb des Innenraums des topfförmigen Kolbens angeordnet sein und eine Rückstellkraft in Form einer Federkraft erzeugen, die auf die innere Fläche wirkt.

In einer weiteren Ausführungsform ist das Systemdruckventil dazu eingerichtet ist, eine Stirnfläche der Kolbenstange mit einem hydraulischen Druck zu beaufschlagen, so dass sich die Kolbenstange in die zweite Schaltstellung oder in die dritte Schaltstellung bewegt. Die hydraulisch wirksame Stirnfläche kann in einem Bereich einer zweiten Stirnseite der Kolbenstange und des Systemdruckventils angeordnet sein. Die hydraulisch wirksame Stirnfläche und das Rückstellelement können sich somit auf einander entgegengesetzten Stirnseiten der Kolbenstange befinden. Die hydraulisch wirksame Stimfläche kann über einen Eingang des Systemdruckventils mit dem primären Systemdruckkreis verbunden sein. Der innerhalb des primären Systemdruckkreises vorherrschende Druck kann somit eine Verstellkraft hervorrufen, die senkrecht auf die hydraulisch wirksame Stirnfläche der Kolbenstange wirkt und entgegen der Vorspannkraft der Feder und entgegen der dem Vorsteuerdruck entsprechenden Vorsteuerkraft gerichtet ist. Somit kann die Kolbenstange mittels der Verstellkraft aus der ersten Schaltstellung in die zweite Schaltstellung bewegt werden. Falls sich die Kolbenstange bereits in ihrer zweiten Schaltstellung befindet, kann sie mittels der Verstellkraft auch aus dieser zweiten Schaltstellung in die dritte Schaltstellung bewegt werden.

Ferner kann das Systemdruckventil dazu eingerichtet sein, eine interne Rückführfläche eines Kolbens der Kolbenstange mit einem hydraulischen Druck zu beaufschlagen, so dass sich die Kolbenstange in die zweite Schaltstellung oder in die dritte Schaltstellung bewegt. Bei dem Kolben kann es sich insbesondere um den vorstehend beschriebenen zweiten Kolben handeln. Bei dem hydraulischen Druck kann es sich insbesondere um den in einer Ventiltasche des primären Systemdruckventils vorherrschenden Druck handeln, der auf die interne Rückführfläche wirken kann. Eine Druckrückführung kann demnach bei dem primären Systemdruckventil über eine interne Rückführfläche umgesetzt werden, wodurch das primäre Systemdruckventil besonders kurz ausgeführt werden kann, da ein Ventilbund bzw. eine Ventiltasche eingespart werden kann. Unter dem Merkmal "intern" kann insbesondere verstanden werden, dass sich die Rückführfläche innerhalb des Ventilgehäuses, insbesondere innerhalb der Ventiltasche, also intern, befindet.

Die Kolbenstange kann dabei einen dritten Kolben umfassen, der mit Abstand zu dem zweiten Kolben weiter in Richtung der zweiten Stirnseite des primären Systemdruckventils angeordnet sein kann. Der Durchmesser des dritten Kolbens kann kleiner sein als derjenige des zweiten Kolbens und innerhalb einer passenden Führungsfläche hin und her verstellt werden. Der dritte Kolben kann dementsprechend eine hydraulisch wirksame Fläche aufweisen, die kleiner ist als die Rückführfläche. Der Druck innerhalb einer Ventiltasche des Systemdruckventils kann sowohl auf die hydraulisch wirksame Fläche des dritten Kolbens als auch auf die Rückführfläche des zweiten Kolbens wirken. Da die hydraulisch wirksame Fläche des dritten Kolbens kleiner ist als die Rückführfläche des zweiten Kolbens, kann der Druck innerhalb der Ventiltasche eine Verstellkraft hervorrufen, die der weiter oben beschriebenen Rückstellkraft, insbesondere der Federkraft der Feder, und der Vorsteuerkraft entgegenwirkt.

Unabhängig davon, ob beispielsweise die hydraulisch wirksame Stirnfläche oder die interne Rückführfläche mit dem hydraulischen Druck beaufschlagt wird, kann sich die Kolbenstange in Abhängigkeit von der Höhe des hydraulischen Drucks in die erste oder in die zweite Schaltstellung bewegen.

In diesem Sinne ist gemäß einer weiteren Ausführungsform vorgesehen, dass das Systemdruckventil durch Belasten der Kolbenstange mit einem hydraulischen Druck dazu eingerichtet ist, die Kolbenstange innerhalb des Ventilgehäuses aus der ersten Schaltstellung in die zweite Schaltstellung zu verstellen, sobald der hydraulische Druck einen ersten Grenzwert überschreitet. Bei dem ersten Grenzwert kann es sich um das Soll-Druckniveau innerhalb des primären Systemdruckkreises handeln. Solange der erste Grenzwert noch nicht überschritten ist, kann ein Kräftegleichgewicht herrschen, welches die Kolbenstange in der ersten Schaltstellung hält. Mit anderen Worten reicht der auf die hydraulisch wirksame Stirnfläche wirksame hydraulische Druck noch nicht aus, um die Kolbenstange in axialer Richtung entgegen der Federkraft und der Vorsteuerkraft zu bewegen. Sobald der hydraulische Druck jedoch den ersten Grenzwert überschreitet, insbesondere wenn das Soll-Druckniveau innerhalb des primären Systemdruckkreises erreicht ist, ruft der hydraulische Druck eine Verstellkraft hervor, die senkrecht auf die hydraulisch wirksame Stirnfläche der Kolbenstange wirkt und entgegen der Vorspannkraft der Feder sowie der dem Vorsteuerdruck entsprechenden Vorsteuerkraft gerichtet ist. Das Kräftegleichgewicht zwischen der Federkraft und Vorsteuerkraft einerseits und der Verstellkraft andererseits ist nicht länger vorhanden, so dass die Kolbenstange in axialer Richtung zur ersten Stirnseite hin in die erste Schaltstellung verstellt wird, um erneut ein Kräftegleichgewicht herzustellen.

Darüber hinaus kann das Systemdruckventil durch Belasten der Kolbenstange mit dem hydraulischen Druck dazu eingerichtet sein die Kolbenstange innerhalb des Ventilgehäuses aus der zweiten Schaltstellung in die dritte Schaltstellung zu verstellen, sobald der hydraulische Druck einen zweiten Grenzwert überschreitet, wobei der zweite Grenzwert höher ist als der erste Grenzwert.

In einer weiteren Ausführungsform umfasst das Systemdruckventil eine erste Ventiltasche, eine zweite Ventiltasche und eine dritte Ventiltasche. Die drei genannten Ventiltaschen können insbesondere durch das Ventilgehäuse des Systemdruckventils gebildet werden. Bei den in der vorliegenden Anmeldung beschriebenen Ventiltaschen kann es sich um Kavitäten innerhalb des Ventilgehäuses handeln. Die Kavitäten können im Bereich einer axialen Ventilbohrung des Ventilgehäuses durch die Kolbenstange ausgefüllt werden. Insbesondere können sich die in der vorliegenden Anmeldung beschriebenen Ventiltaschen in einer radialen Richtung des primären Systemdruckventils jeweils weiter nach außen erstrecken als eine in axialer Richtung verlaufende innere Führungsfläche für die Kolbenstange bzw. als die axiale Ventilbohrung des Ventilgehäuses. Die Ventiltaschen können dabei einen insbesondere Torus-förmigen Druckraum bilden, der in radialer Richtung des Systemdruckventils über die axiale Ventilbohrung übersteht. Dieser Druckraum kann mit Öl gefüllt werden und zwar auch insbesondere dann, wenn ein Kolben der Kolbenstange den Druckraum zum radial weiter innen liegenden Innenraum des Ventilgehäuses verschließt. Die Führungsfläche bzw. die axiale Ventilbohrung kann dabei dem betreffenden Durchmesser der Kolbenstange entsprechen oder einen geringfügig größeren Durchmesser als die Kolbenstange aufweisen, so dass die Kolbenstange möglichst reibungs- und verschleißfrei innerhalb der Führungsfläche bzw. der Ventilbohrung in der axialen Richtung des primären Systemdruckventils hin und her verschoben werden kann. Die Ventiltaschen können weiterhin jeweils mit einem oder mehreren Anschlüssen des Systemdruckventils verbunden sein. Eine oder mehrere Ventiltaschen können mittels der Kolbenstange voneinander getrennt oder miteinander verbunden werden.

Die erste Ventiltasche ist mit dem ersten Eingang und mit dem ersten Ausgang verbunden. Die zweite Ventiltasche ist mit dem zweiten Eingang und mit dem zweiten Ausgang verbunden, und die dritte Ventiltasche ist mit dem dritten Ausgang verbunden. Die Kolbenstange trennt in der ersten Schaltstellung die erste Ventiltasche und die zweite Ventiltasche von der dritten Ventiltasche. In der zweiten Schaltstellung gibt die Kolbenstange eine Verbindung der zweiten Ventiltasche und der dritten Ventiltasche frei. In der dritten Schaltstellung gibt die Kolbenstange eine Verbindung zwischen der ersten Ventiltasche und der dritten Ventiltasche sowie eine Verbindung zwischen der zweiten Ventiltasche und der dritten Ventiltasche frei.

Gemäß der vorliegenden Erfindung wird vorgeschlagen, eine Übermenge von Öl innerhalb des primären Systemdruckkreises nicht über eine Leitung "außerhalb" des primären Systemdruckkreises in den Sekundärkreis zu leiten. Stattdessen kann eine Übermenge des primären Systemdruckkreises über ein Abstimmen von Steuerkanten innerhalb des primären Systemdruckkreises in der dritten Ventiltasche zusammengeführt werden. Dadurch kann das Ventil kürzer ausgeführt werden und Bauraum gespart werden, was wiederum die konstruktive Anordnung vereinfacht. In diesem Sinne ist gemäß einer weiteren Ausführungsform vorgesehen, dass die erste Kolbenstange einen Kolben mit einer primären Steuerkante aufweist, und dass die erste Kolbenstange einen weiteren Kolben mit einer sekundären Steuerkante aufweist. Die Kolbenstange kann dazu eingerichtet sein, die Verbindung zwischen der zweiten Ventiltasche und der dritten Ventiltasche über die sekundäre Steuerkante freizugeben. Weiterhin kann die Kolbenstange dazu eingerichtet sein, die Verbindung zwischen der ersten Ventiltasche und der dritten Ventiltasche über die primäre Steuerkante freizugeben. Wenn die Kolbenstange dabei in die dritte Schaltstellung verstellt wird, kann durch eine entstehende Öffnung des Querschnitts an der sekundären Steuerkante ein Druckabfall entstehen. Ein stromabwärts des zweiten Ausgangs angeordnetes Rückhalteventil bzw. Rückschlagventil kann auf Grund eines resultierenden Druckunterschiedes schließen und ein Druck in der Sekundärpumpe kann anschließend abgesenkt werden.

Gemäß einem zweiten Aspekt der Erfindung wird ein Hydrauliksystem für ein Kraftfahrzeug-Getriebe bereitgestellt. Das Hydrauliksystem umfasst eine Primärpumpe, eine Sekundärpumpe, einen primären Systemdruckkreis, einen sekundären Systemdruckkreis und ein primäres Systemdruckventil gemäß dem vorstehend beschriebenen ersten Aspekt der Erfindung. In dem Hydrauliksystem ist die Primärpumpe mit dem ersten Eingang des primären Systemdruckventils verbunden. Die Sekundärpumpe ist mit dem zweiten Eingang des primären Systemdruckventils verbunden. Der primäre Systemdruckkreis ist mit dem ersten Ausgang des primären Systemdruckventils und mit dem zweiten Ausgang des primären Systemdruckventils verbunden, und der sekundäre Systemdruckkreis ist mit dem dritten Ausgang des primären Systemdruckventils verbunden.

In einer Ausführungsform kann das Hydrauliksystem weiterhin einen Systemdruckregler umfassen, welcher dazu eingerichtet sein kann, einen Vorsteuerdruck auszugeben, der dem primären Systemdruckventil zugeführt werden kann, so dass eine Vorspannkraft des Rückstellelements unterstützt wird. Dabei kann der Innenraum des topfförmigen Kolbens der Kolbenstange des primären Systemdruckventils mit einem vierten Eingang des primären Systemdruckventils verbunden sein. Dieser vierte Eingang kann mit einem Ausgang des Systemdruckreglers verbunden sein, der den Vorsteuerdruck ausgibt. Der Systemdruckregler kann dazu ein variabel einstellbares, elektrisches Drucksteuerventil umfassen. Ein Eingang des Systemdruckreglers kann mit dem primären Systemdruckkreis verbunden sein, welcher dem Systemdruckregler einen Ölvolumenstrom zuführt. Der durch den Systemdruckregler erzeugte Vorsteuerdruck, der beispielsweise Werte zwischen 0 und 8 bar annimmt, kann mittels einer variablen Magnetspule variabel eingestellt werden. Der Vorsteuerdruck kann auf die innere Fläche des topfförmigen Kolbens wirken, wodurch diese hydraulisch wirksam wird. Gemeinsam kann mit der Federkraft und dem Vorsteuerdruck über eine Ventilübersetzung des Systemdruckventils ein Soll-Druckniveau, beispielsweise zwischen 3 bar und 20 bar, innerhalb des primären Systemdruckkreises vorgegeben und eingestellt werden.

Das Hydrauliksystem kann weiterhin ein weiteres Systemdruckventil ("sekundäres Systemdruckventil") umfassen, welches dazu eingerichtet ist, einen Systemdruck innerhalb des sekundären Systemdruckkreises vorzugeben und einzustellen. Weiterhin ist das weitere Systemdruckventil bei einer Überschreitung des vorgegebenen Systemdrucks dazu eingerichtet, den sekundären Systemdruckkreis mit einer Ansaugseite der Primärpumpe und der Sekundärpumpe zu verbinden.

Gemäß einem dritten Aspekt der Erfindung wird ein Getriebe, insbesondere ein Automatikgetriebe, für ein Kraftfahrzeug bereitgestellt. Das Getriebe umfasst ein Hydrauliksystem gemäß dem zweiten Aspekt der Erfindung.

Gemäß einem vierten Aspekt der Erfindung wird ein Kraftfahrzeug bereitgestellt, welches ein Getriebe gemäß dem dritten Aspekt der Erfindung umfasst.

Im Folgenden werden Ausführungsbeispiele der Erfindung anhand der schematischen Zeichnung näher erläutert, wobei gleiche oder ähnliche Elemente mit dem gleichen Bezugszeichen versehen sind. Hierbei zeigt
- Fig. 1: ein Fahrzeug mit einem Automatikgetriebe, welches ein Ausführungsbei-spiel eines erfindungsgemäßen Hydrauliksystems umfasst,
- Fig. 2: einen hydraulischen Schaltplan eines Teils eines Hydrauliksystems in einem ersten Betriebszustand für den Einsatz in dem Automatikgetriebe nach Fig. 1,
- Fig. 3: eine vergrößerte Darstellung eines primären, erfindungsgemäßen Systemdruckventils des Hyd-rauliksystems nach Fig. 2,
- Fig. 4: das Hydrauliksystem nach Fig. 2 in einem zweiten Betriebszustand,
- Fig. 5: das Hydrauliksystem nach Fig. 2 in einem dritten Betriebszustand,
- Fig. 6: das Hydrauliksystem nach Fig. 2 in einem vierten Betriebszustand,
- Fig. 7: eine vergrößerte Darstellung eines sekundären Systemdruckventils des Hydrauliksystems nach Fig. 2, und
- Fig. 8: einen Teil des Hydrauliksystems nach Fig. 2 mit einem alternativen primären, erfindungsgemäßen Systemdruckventil.

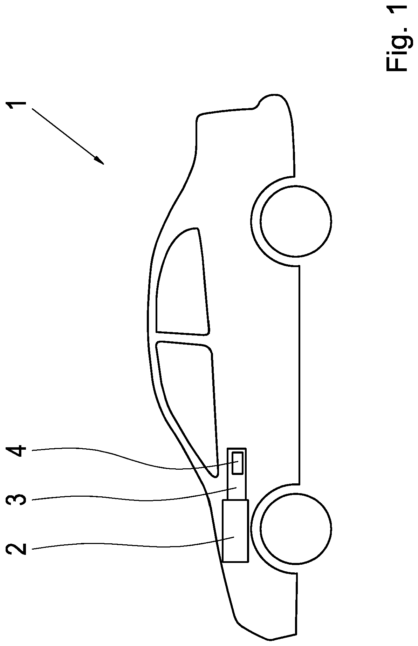

Fig. 1 zeigt ein Kraftfahrzeug 1, in dem gezeigten Beispiel ein Pkw. Das Kraftfahrzeug 1 umfasst einen Verbrennungskraftmotor 2, welcher das Kraftfahrzeug 1 über ein Automatikgetriebe 3, welches ein Hydrauliksystem 4 aufweist, antreibt.

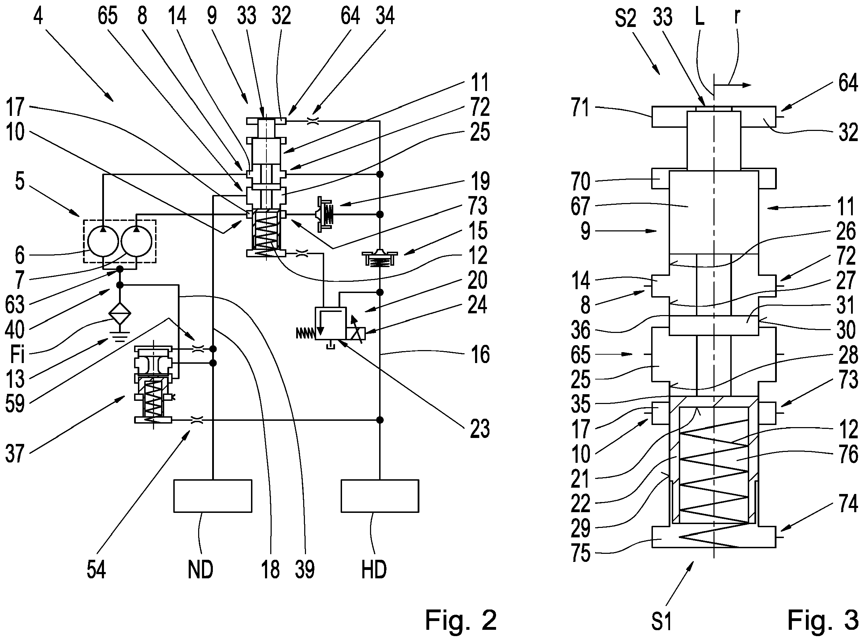

Fig. 2 zeigt einen Teil eines Schaltplans des Hydrauliksystems 4 nach Fig. 1. Das Hydrauliksystem 4 umfasst ein Pumpensystem 5, in dem gezeigten Ausführungsbeispiel ein duales Pumpensystem. Das Pumpensystem 5 umfasst eine Primärpumpe 6 und eine Sekundärpumpe 7, welche beispielsweise durch den Verbrennungskraftmotor 2 des Kraftfahrzeugs 1 (Fig. 1) angetrieben werden können.

Die Primärpumpe 6 und die Sekundärpumpe 7 können zwei voneinander getrennte Pumpen sein. Das Pumpensystem 5 kann jedoch auch die Primärpumpe 6 und die Sekundärpumpe 7 in einer einzigen Pumpe vereinigen, beispielsweise in einer doppelhubige Flügelzellenpumpe. Die doppelhubige Flügelzellenpumpe kann einen primären Hubraum und einen sekundären Hubraum umfassen. Ein Rotor der doppelhubigen Flügelzellenpumpe kann von dem Verbrennungskraftmotor 2 angetrieben werden. Bei sich drehendem Rotor kann die Flügelzellenpumpe über einen primären Ausgang eine primäre Ölflut aus dem primären Hubraum heraus fördern und über einen sekundären Ausgang eine sekundäre Ölflut aus dem sekundären Hubraum heraus fördern. Der Ausgang der Primärpumpe 6 kann an einen ersten Eingang 8 eines primären Systemdruckventils 9 angeschlossen werden. Der Ausgang der Sekundärpumpe 7 kann an einen zweiten Eingang 10 des primären Systemdruckventils 9 angeschlossen werden. Das primäre Systemdruckventil 9 ist ein Druckregelventil, welches dazu eingerichtet ist, einen innerhalb eines primären Systemdruckkreises 16 (Hochdruckkreis HD) vorherrschenden Druck zu begrenzen.

Das primäre Systemdruckventil 9 weist eine Kolbenstange 11 auf, welche axial innerhalb eines Ventilkörpers bzw. eines Ventilgehäuses 71 des primären Systemdruckventils 9 hin und her verschiebbar aufgenommen ist. Die Kolbenstange 11 ist weiterhin durch ein Rückstellmittel, in dem gezeigten Ausführungsbeispiel durch eine Feder 12, axial in der durch Fig. 2 gezeigten ersten Schaltstellung vorgespannt. Aus Gründen der besseren Übersichtlichkeit sind einige Bezugszeichen des primären Systemdruckventils 9 lediglich in dessen vergrößerter Darstellung in Fig. 3 gezeigt.

In der durch Fig. 2 gezeigten ersten Schaltstellung der Kolbenstange 11 des primären Systemdruckventils 9 kann die Primärpumpe 6, sofern sie beispielsweise durch den Verbrennungskraftmotor 2 angetrieben wird, den primären Systemdrucckreis 16 mit der primären Ölflut speisen. Insbesondere kann die Primärpumpe 6 Hydraulikflüssigkeit in Form von Öl aus einem Reservoir für Hydraulikflüssigkeit in Form eines Ölsumpfes 13 über einen Filter Fi ansaugen. Die Primärpumpe 6 kann das angesaugte Öl über den ersten Eingang 8 des primären Systemdruckventils 9 in eine erste Ventiltasche 14 fördern, die innerhalb des primären Systemdruckventils 9 durch dessen Ventilgehäuse 71 gebildet wird. Über einen ersten Ausgang 72 des primären Systemdruckventils 9 kann das Öl durch den von der Primärpumpe 6 erzeugten Druck über eine Leitung und über ein erstes Rückhalteventil 15 in den primären Systemdruckkreis 16 gefördert werden, um innerhalb des primären Systemdruckkreises 16 einen vorgesehenen Druck einzustellen.

Auf ähnliche Weise kann in der durch Fig. 2 gezeigten ersten Schaltstellung der Kolbenstange 11 des primären Systemdruckventils 9 die Sekundärpumpe 7, sofern sie beispielsweise durch den Verbrennungsmotor 2 angetrieben wird, den primären Systemdruckkreis 16 mit der sekundären Ölflut speisen. Insbesondere kann die Sekundärpumpe 7 Öl aus dem Ölsumpf 13 über den Filter Fi ansaugen und über den zweiten Eingang 10 des Systemdruckventils 9, eine durch das Ventilgehäuse 71 gebildete zweite Ventiltasche 17 innerhalb des primären Systemdruckventils 9, dessen zweiten Ausgang 73 sowie ein zweites Rückhalteventil 19 ebenfalls in den primären Systemdruckkreis 16 fördern.

Ein sekundärer Systemdruckkreis 18 (Niederdruckkreis ND) wird in der durch Fig. 2 gezeigten Schaltstellung nicht mit Druck versorgt, da die druckseitigen Ausgänge der Primärpumpe 6 und der Sekundärpumpe 7 nicht mit dem sekundären Systemdrucckreis 18 verbunden sind. Das zweite Rückhalteventil 19 verhindert, dass von der Primärpumpe 6 über die erste Ventiltasche 14 in Richtung des primären Systemdruckkreises 16 gefördertes Öl über die zweite Ventiltasche 17 in Richtung der Sekundärpumpe 7 gelangen kann. Weiterhin weist das Hydrauliksystem 4 ein sekundäres Systemdruckventil 37 auf, dessen Aufbau und Funktionsweise weiter unten näher erläutert werden.

In der durch Fig. 2 gezeigten Schaltstellung ist der primäre Systemdruckkreis 16 noch nicht gesättigt. Ein Soll-Druckniveau innerhalb des primären Systemdruckkreises 16 ist noch nicht erreicht. Das Soll-Druckniveau kann über eine Bestromung eines Systemdruckreglers 20 angesteuert werden. Ein Ausgabedruck des Systemdruckreglers 20, der sogenannte Vorsteuerdruck, kann dabei auf eine innere hydraulisch wirksame Fläche wirken, in dem gezeigten Ausführungsbeispiel auf eine Kreisfläche 21. Dazu ist ein Ausgang des Systemdruckreglers 20 mit einem vierten Eingang 74 des primären Systemdruckventils 9 verbunden. Der vierte Eingang 74 mündet in eine durch das Ventilgehäuse 71 des primären Systemdruckventils 9 gebildete fünfte Ventiltasche 75, welche mit einem Innenraum 76 eines ersten topfförmigen Kolbens 22 des primären Systemdruckventils 9 verbunden ist.

Die innere hydraulisch wirksame Kreisfläche 21 wird durch den ersten topfförmigen Kolben 22 in dessen Innenraum 76 gebildet. Auf die innere hydraulisch wirksame Kreisfläche 21 wirkt auch die Vorspannkraft in Form der Federkraft der Feder 12. Die innere hydraulisch wirksame Fläche 21 verläuft senkrecht zu einer möglichen Verstellrichtung L der Kolbenstange. Die Verstellrichtung L kann mit einer axialen Richtung L des primären Systemdruckventils 9 übereinstimmen.

Der Vorsteuerdruck kann beispielsweise zwischen 0 bar und 8 bar betragen. Das primäre Systemdruckventil 9 weist eine Ventilübersetzung auf, durch welche ein Soll-Druckniveau, beispielsweise zwischen 3 bar und 20 bar, innerhalb des primären Systemdruckkreises 16 vorgegeben und eingestellt werden kann. Beispielsweise kann ein Vorsteuerdruck von 8 bar aufgrund der der Ventilübersetzung des primären Systemdruckventils 9 zu einem maximalen Druck von 20 bar innerhalb des primären Systemdruckkreises 16 führen. Weiterhin kann beispielsweise ein Vorsteuerdruck von 0 bar aufgrund der der Ventilübersetzung des primären Systemdruckventils 9 zu einem minimalen Druck von 3 bar innerhalb des primären Systemdruckkreises 16 führen.

Der topfförmige Kolben 22 ist dabei an einer ersten Stirnseite S1 (in Fig. 2 und 3 unten dargestellt) der Kolbenstange 11 und des primären Systemdruckventils 9 angeordnet. Der Systemdruckregler 20 umfasst ein von dem primären Systemdruckkreis versorgtes, variabel einstellbares, elektrisches Drucksteuerventil 23. Ein Eingang des Drucksteuerventils 23 ist mit dem primären Systemdruckkreis 16 verbunden, welcher dem Drucksteuerventil 23 einen Ölvolumenstrom zuführt. Ein Eingangsdruck des Drucksteuerventils 23 kann somit dem innerhalb des primären Systemdruckkreises 16 herrschenden Druck entsprechen.

Der Ausgangsdruck pₐ des Systemdruckreglers 20 kann mittels einer variablen Magnetspule 24 variabel eingestellt werden. Die Magnetspule 24 kann bestromt werden, so dass eine Magnetkraft hervorgerufen wird. Mittels der Magnetkraft kann beispielsweise ein Kugelsitz oder ein Schieberventil des Drucksteuerventils 23 betätigt werden, wodurch ein bestimmter Ausgangsdruck pₐ bzw. Vorsteuerdruck eingestellt werden kann. Der Ausgangsdruck pₐ kann beispielsweise maximal sein (z.B. 8 bar), wenn kein Strom an der variablen Magnetspule 24 angelegt wird. Der Ausgangsdruck pₐ kann beispielsweise minimal sein (z.B. 0 bar), wenn ein maximal vorgesehener Strom an der variablen Magnetspule 24 angelegt wird. Auf diese Weise lässt sich der Ausgangsdruck pₐ variabel einstellen. Somit kann auch ein in Richtung der Vorspannkraft der Feder 12 wirkende Steuerdruck variabel eingestellt werden.

Der Ausgangsdruck pₐ kann durch eine entsprechende Bestromung relativ hoch eingestellt werden. Dadurch resultiert ein in Richtung der Vorspannkraft der Feder 12 wirkender Steuerdruck, der die Vorspannkraft der Feder 12 verstärkt. Somit tendiert die Kolbenstange 11 dazu, in einer durch Fig. 2 und 3 gezeigten ersten Schaltstellung zu verharren. In dieser ersten Schaltstellung ist die erste Ventiltasche 14 nicht mit einer dritten Ventiltasche 25 verbunden, welche mit dem sekundären Systemdruckkreis 18 verbunden ist. Auch die zweite Ventiltasche 17 ist nicht mit der dritten Ventiltasche 25 verbunden.

Die erste Ventiltasche 14, die zweite Ventiltasche 17 und die dritte Ventiltasche 25 können sich in einer radialen Richtung r des primären Systemdruckventils 9 jeweils weiter nach außen erstrecken als eine innere Führungsfläche 26 für die Kolbenstange 11. Die Führungsfläche 26 kann einen geringfügig größeren Durchmesser als die Kolbenstange 11 aufweisen, so dass die Kolbenstange 11 möglichst reibungs- und verschleißfrei innerhalb der Führungsfläche 26 in der axialen Richtung L des primären Systemdruckventils 9 hin und her verschoben werden kann. Ein erster Abschnitt 27 der Führungsfläche 26 erstreckt sich dabei von der ersten Ventiltasche 14 bis zu der dritten Ventiltasche 25, und ein zweiter Abschnitt 28 der Führungsfläche erstreckt sich von der zweiten Ventiltasche 17 bis zu der dritten Ventiltasche 25.

In der durch Fig. 2 und 3 gezeigten ersten Schaltstellung der Kolbenstange 11 des primären Systemdruckventils 9 liegt eine radial äußere Oberfläche 29 des topfförmigen Kolbens 22 an dem zweiten Abschnitt 28 der Führungsfläche 26 an. Dabei verschließt die radial äußere Oberfläche 29 des topfförmigen Kolbens 22 eine mögliche Verbindung zwischen der zweiten Ventiltasche 17 und der dritten Ventiltasche 25 über eine sekundäre Steuerkante 35 des topfförmigen Kolbens 22. Weiterhin liegt in der durch Fig. 2 und 3 gezeigten ersten Schaltstellung der Kolbenstange 11 eine radial äußere Oberfläche 30 eines zweiten Kolbens 31 der Kolbenstange 11 an dem ersten Abschnitt 27 der Führungsfläche 26 an. Dabei verschließt die radial äußere Oberfläche 30 des zweiten Kolbens 31 eine mögliche Verbindung zwischen der ersten Ventiltasche 14 und der dritten Ventiltasche 25 über eine primäre Steuerkante 36 des zweiten Kolbens 31. Der zweite Kolben 31 ist dabei in der axialen Richtung L des primären Systemdruckventils 9 mit Abstand zu dem topfförmigen Kolben 22 an der Kolbenstange 11 angeordnet und erstreckt sich in radialer Richtung r des primären Systemdruckventils 9 bis zum ersten Abschnitt 27 der Führungsfläche 26.

In dem durch Fig. 2 gezeigten Ausführungsbeispiel weist das Systemdruckventil 11 im Bereich einer zweiten Stirnseite S2 (in Fig. 2 und 3 oben dargestellt) der Kolbenstange 9 und des primären Systemdruckventils 11 eine durch das Ventilgehäuse 71 gebildete vierte Ventiltasche 32 auf. In der durch Fig. 2 gezeigten ersten Schaltstellung der Kolbenstange 11 befindet sich eine hydraulisch wirksame Stirnfläche 33 der Kolbenstange 11 (beispielsweise eine Kreisfläche) innerhalb der vierten Ventiltasche 32. Die vierte Ventiltasche 32 ist über die erste Ventiltasche 14 mit der Primärpumpe 6 verbunden und über die zweite Ventiltasche 17 mit der Sekundärpumpe 7 verbunden, in dem gezeigten Ausführungsbeispiel über einen dritten Eingang 64 und über eine erste Drossel 34. Der durch die Primärpumpe 6 und durch die Sekundärpumpe 7 erzeugte hydraulische Druck kann somit eine Verstellkraft hervorrufen, die senkrecht auf die hydraulisch wirksame Stirnfläche 33 der Kolbenstange 11 wirkt und entgegen der Vorspannkraft der Feder 12 und der dem Vorsteuerdruck entsprechenden Vorsteuerkraft gerichtet ist. Der genannte hydraulische Druck kann insbesondere bei geöffnetem ersten Rückhalteventil 15 dem innerhalb des primären Systemdruckkreises 16 vorherrschenden Druck entsprechen.

In dem durch Fig. 2 gezeigten Zustand, in welchem das Soll-Druckniveau innerhalb des primären Systemdruckkreises 16 noch nicht erreicht ist, herrscht ein Kräftegleichgewicht, welches die Kolbenstange 11 in der ersten Schaltstellung hält. Mit anderen Worten reicht die auf die hydraulisch wirksame Stirnfläche 33 wirksame Verstellkraft noch nicht aus, um die Kolbenstange 11 in axialer Richtung L entgegen der Federkraft und entgegen der Vorsteuerkraft zu bewegen.

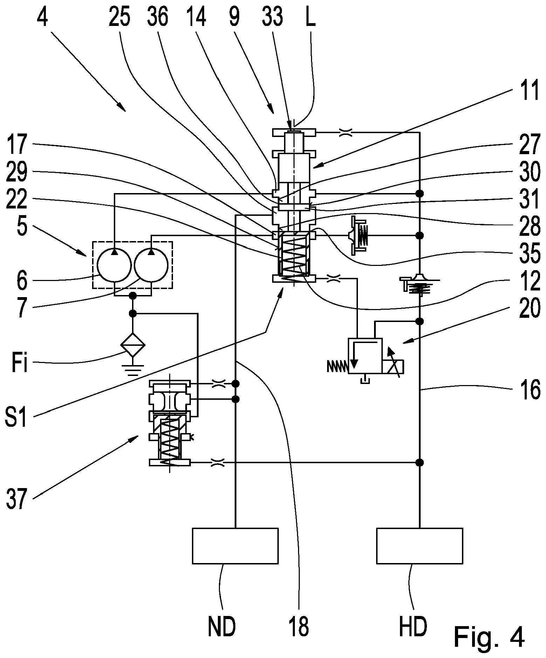

In dem durch Fig. 4 gezeigten Betriebszustand des Hydrauliksystems 4 werden die Drehzahl der Primärpumpe 6 und die Drehzahl der Sekundärpumpe 7 so lange erhöht, bis das durch den Systemdruckregler 20 vorgegebene Soll-Druckniveau, z.B. 10 bar, innerhalb des primären Systemdruckkreises 16 erreicht ist. Dieser Druck von beispielsweise 10 bar ruft wie vorstehend beschrieben eine Verstellkraft hervor, die senkrecht auf die hydraulisch wirksame Stirnfläche 33 der Kolbenstange 11 wirkt und entgegen der Vorspannkraft der Feder 12 und der dem Vorsteuerdruck entsprechenden Vorsteuerkraft gerichtet ist. Sobald das Soll-Druckniveau innerhalb des primären Systemdruckkreises 16 erreicht ist, stimmt das Gleichgewicht zwischen der Federkraft und Vorsteuerkraft einerseits und der Verstellkraft andererseits nicht mehr, so dass die Kolbenstange 11 in axialer Richtung zur ersten Stirnseite S1 hin in eine Schaltstellung verschoben wird, wie dies durch Fig. 4 gezeigt ist.

In dieser Schaltstellung gemäß Fig. 4 ist ein Kräftegleichgewicht zwischen der Federkraft und Vorsteuerkraft einerseits sowie der Verstellkraft andererseits noch nicht wiederhergestellt. In der durch Fig. 4 gezeigten Schaltstellung liegt die radial äußere Oberfläche 29 des topfförmigen Kolbens 22 weiterhin an dem zweiten Abschnitt 28 der Führungsfläche 26 an. Dabei verschließt die radial äußere Oberfläche 29 des topfförmigen Kolbens 22 weiterhin eine mögliche Verbindung zwischen der zweiten Ventiltasche 17 und der dritten Ventiltasche 25 über die sekundäre Steuerkante 35. Außerdem liegt in der durch Fig. 4 gezeigten Schaltstellung der Kolbenstange 11 die radial äußere Oberfläche 30 des zweiten Kolbens 31 der Kolbenstange 11 an dem ersten Abschnitt 27 der Führungsfläche 26 an. Dabei verschließt die radial äußere Oberfläche 30 des zweiten Kolbens 31 immer noch eine mögliche Verbindung zwischen der ersten Ventiltasche 14 und der dritten Ventiltasche 25 über die primäre Steuerkante 36.

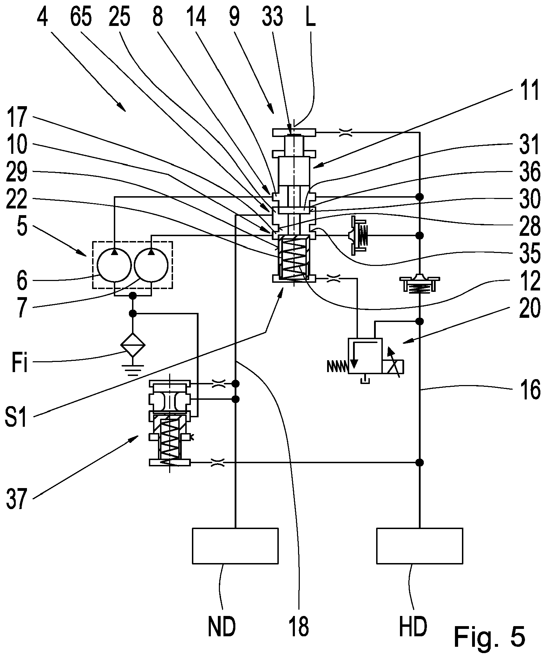

In dem durch Fig. 5 gezeigten Betriebszustand des Hydrauliksystems 4 ruft der erreichte Soll-Druck innerhalb des primären Systemdruckkreises 16 weiterhin eine Verstellkraft hervor, die senkrecht auf die hydraulisch wirksame Stirnfläche 33 der Kolbenstange 11 wirkt und entgegen der Vorspannkraft der Feder 12 und der dem Vorsteuerdruck entsprechenden Vorsteuerkraft gerichtet ist. Die Verstellkraft ist weiterhin ausreichend hoch, dass die Kolbenstange 11 in axialer Richtung zur ersten Stirnseite S1 hin in eine zweite Schaltstellung verschoben wird, die durch Fig. 5 gezeigt ist.

In der zweiten Schaltstellung der Kolbenstange 11 gemäß Fig. 5 liegt die radial äußere Oberfläche 29 des topfförmigen Kolbens 22 nicht länger an dem zweiten Abschnitt 28 der Führungsfläche 26 an. Somit gibt der topfförmige Kolben 22 die Verbindung zwischen der zweiten Ventiltasche 17 und der dritten Ventiltasche 25 über die sekundäre Steuerkante 35 frei (Regelung auf sekundärer Steuerkante 35). Ein überschüssiger Anteil der durch die Sekundärpumpe 7 erzeugten sekundären Ölflut, die nicht zur Aufrechterhaltung des Soll-Druckniveaus innerhalb des primären Systemdruckkreises 16 benötigt wird, kann nun über die zweite Ventiltasche 17, die dritte Ventiltasche 25 und einen mit der dritten Ventiltasche 25 verbundenen dritten Ausgang 65 des primären Systemdruckventils 9 in den sekundären Systemdruckkreis 18 geleitet werden. Auf diese Weise kann innerhalb des sekundären Systemdruckkreises 18 ein Druck aufgebaut werden.

Die Sekundärpumpe 7 speist jedoch auch weiterhin über die zweite Ventiltasche 17 in den primären Systemdruckkreis 16 ein, dessen Soll-Druckniveau durch die Primärpumpe 6 und die Sekundärpumpe 7 gehalten wird. In der durch Fig. 5 gezeigten zweiten Schaltstellung der Kolbenstange 11 liegt die radial äußere Oberfläche 30 des zweiten Kolbens 31 der Kolbenstange 11 noch an dem ersten Abschnitt 27 der Führungsfläche 26 an. Dabei verschließt die radial äußere Oberfläche 30 des zweiten Kolbens 31 immer noch eine mögliche Verbindung zwischen der ersten Ventiltasche 14 und der dritten Ventiltasche 25 über die primäre Steuerkante 36. Die Primärpumpe 6 speist ihre primäre Ölflut somit weiterhin lediglich in den primären Systemdrucckreis 16 ein.

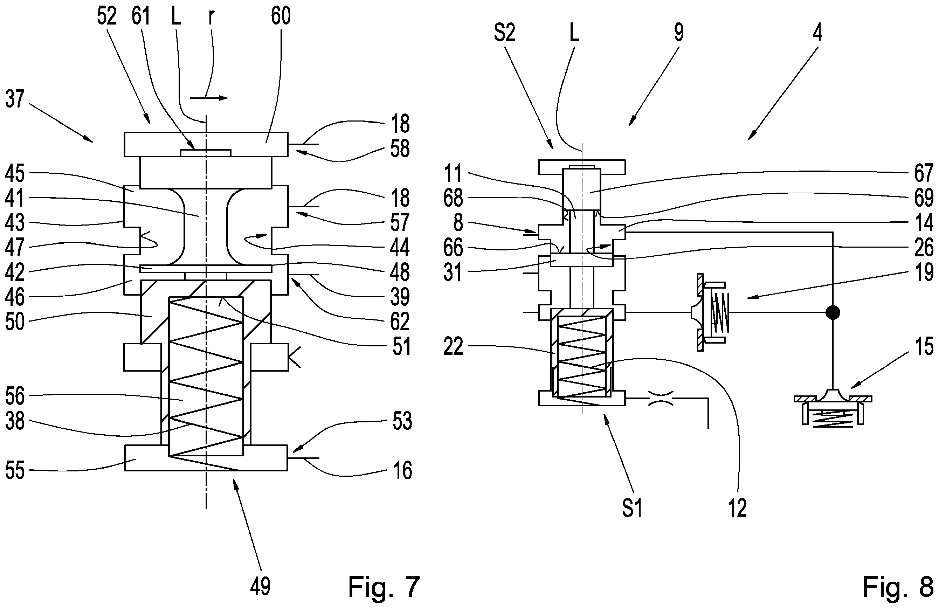

Das sekundäre Systemdruckventil 37 ist ein Druckregelventil, welches dazu eingerichtet ist, den innerhalb des sekundären Systemdruckkreises 18 vorherrschenden Druck einzustellen und zu begrenzen. Das sekundäre Systemdruckventil 37 weist eine sekundäre Kolbenstange 41 auf, welche sich in den durch Fig. 2 bis 5 gezeigten Betriebszuständen des Hydrauliksystems 4 in einer durch eine zweite Feder 38 vorgespannten Ausgangsstellung befindet, da die Ölmenge im sekundären Systemdruckkreis 18 noch nicht ausreicht, um ein vorgesehenes Niederdruckniveau zu erreichen. Aus Gründen der besseren Übersichtlichkeit sind einige Bezugszeichen des sekundären Systemdruckventils 37 lediglich in dessen vergrößerter Darstellung in Fig. 7 gezeigt.

In seiner Ausgangsstellung gemäß Fig. 2 verschließt ein Kolben 42 der sekundären Kolbenstange 41 eine mögliche Verbindung zwischen dem sekundären Systemdruckkreis 18 und einer Leitung 39, die zu einer Pumpensaugseite 40 führt. Im Detail umfasst das sekundäre Systemdruckventil 37 einen sekundären Ventilkörper 43, welcher eine sekundäre Führungsfläche 44 zur Führung der sekundären Kolbenstange 41 in einer axialen Richtung L des sekundären Systemdruckventils 37 bildet. Weiterhin bildet der sekundäre Ventilkörper 43 eine erste Ventiltasche 45 und eine zweite Ventiltasche 46.

Die erste Ventiltasche 45 und die zweite Ventiltasche 46 können sich in einer radialen Richtung r des sekundären Systemdruckventils 37 jeweils weiter nach außen erstrecken als die sekundäre Führungsfläche 44 für die sekundäre Kolbenstange 41. Die sekundäre Führungsfläche 44 kann einen geringfügig größeren Durchmesser als die sekundäre Kolbenstange 41 mit ihren Kolben aufweisen, so dass die sekundäre Kolbenstange 41 möglichst reibungs- und verschleißfrei innerhalb der sekundären Führungsfläche 44 in der axialen Richtung L des sekundären Systemdruckventils 41 hin und her verschoben werden kann. Ein Abschnitt 47 der sekundären Führungsfläche 44 erstreckt sich dabei von der ersten Ventiltasche 45 bis zu der zweiten Ventiltasche 46.

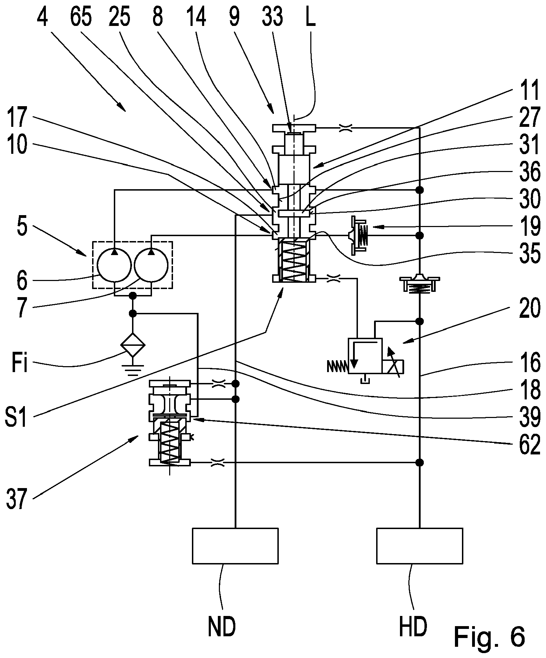

In der durch Fig. 2 bis 5 gezeigten Ausgangsstellung der sekundären Kolbenstange 41 verschließt der Kolben 42 der sekundären Kolbenstange 41 eine mögliche Verbindung zwischen der ersten Ventiltasche 45 und der zweiten Ventiltasche 46 über eine Steuerkante 48, welche durch den Kolben 42 gebildet wird. In der durch Fig. 6 gezeigten Öffnungsstellung der sekundären Kolbenstange 41 (siehe auch die vergrößerte Darstellung in Fig. 7) hingegen gibt der Kolben 42 der sekundären Kolbenstange 41 die Verbindung zwischen der ersten Ventiltasche 45 und der zweiten Ventiltasche 46 über die Steuerkante 48 frei.

Auf einer ersten Stirnseite 49 des sekundären Systemdruckventils 37 umfasst die sekundäre Kolbenstange 41 einen topfförmigen Kolben 50. Die Feder 38 erzeugt eine Federkraft, die auf eine innere hydraulisch wirksame Kreisfläche 51 des topfförmigen Kolbens 50 wirkt. Die Federkraft wirkt dabei in axialer Richtung L und ist in Richtung einer zweiten Stimseite 52 des sekundären Systemdruckventils 37 orientiert. Ein erster Eingang 53 des sekundären Systemdruckventils 37 ist über eine zweite Drossel 54 mit dem primären Systemdruckkreis 16 verbunden. Der erste Eingang 53 mündet in eine dritte Ventiltasche 55, die durch den sekundären Ventilkörper 43 gebildet wird. Die dritte Ventiltasche 55 ist mit einem Innenraum 56 des topfförmigen Kolbens 50 verbunden. Öl aus dem primären Systemdruckkreis 16 kann somit über die zweite Drossel 53, den ersten Eingang 53 und die dritte Ventiltasche 55 in den Innenraum 56 des topfförmigen Kolbens 50 gelangen. Das Öl kann die dritte Ventiltasche 55 und den Innenraum 56 des topfförmigen Kolbens 50 ausfüllen und einen hydraulischen Druck innerhalb des Innenraums 56 aufbauen. Dieser hydraulische Druck kann insbesondere auf die innere hydraulisch wirksame Kreisfläche 51 des topfförmigen Kolbens 50 wirken. Eine diesem hydraulischen Druck entsprechende sekundäre Vorsteuerkraft wirkt in Richtung und verstärkt dadurch die von der Feder 38 erzeugte Federkraft.

Ein zweiter Eingang 57 des sekundären Systemdruckventils 37 ist auf der einen Seite mit dem sekundären Systemdruckkreis 18 verbunden. Auf der anderen Seite ist der zweite Eingang 57 mit der ersten Ventiltasche 45 verbunden. Ein dritter Eingang 58 des sekundären Systemdruckventils 37 ist auf der einen Seite über eine dritte Drossel 59 mit dem sekundären Systemdruckkreis 18 verbunden. Auf der anderen Seite ist der dritte Eingang 58 mit einer vierten Ventiltasche 60 verbunden.

Die sekundäre Kolbenstange 41 bildet im Bereich der zweiten Stirnseite 52 des sekundären Systemdruckventils 37 eine hydraulische wirksame Stirnfläche 61. Öl aus dem sekundären Systemdruckkreis 18 kann über die dritte Drossel 59 und den dritten Eingang 58 in die vierte Ventiltasche 60 gelangen. Das Öl kann die vierte Ventiltasche 60 ausfüllen und einen Druck innerhalb der vierten Ventiltasche 60 aufbauen. Dieser Druck kann auf die hydraulische wirksame Stirnfläche 61 der sekundären Kolbenstange 41 wirken, wodurch eine Verstellkraft hervorgerufen wird, die entgegengesetzt einer resultierenden aus der Federkraft der Feder 38 und der sekundären Vorsteuerkraft wirkt, die durch den gedrosselten Druck des primären Systemdrucckreises 16 hervorgerufen wird.

In den durch Fig. 2 bis 5 gezeigten Betriebszuständen des Hydrauliksystems 4 besteht ein Kräftegleichgewicht zwischen der Federkraft der Feder 38 und der sekundären Vorsteuerkraft einerseits sowie der Verstellkraft andererseits, die durch den Öldruck innerhalb der vierten Ventiltasche 60 hervorgerufen wird. Dieses Kräftegleichgewicht besteht, solange die Federkraft der Feder 38 und die Vorsteuerkraft größer sind als die Verstellkraft. Dies ist solange der Fall, bis der Druck innerhalb des sekundären Systemdruckkreises 18 sein vorgegebenes Soll-Druckniveau erreicht hat (das durch die Federkraft und die Vorsteuerkraft vorgegeben wird).

Ein Ausgang 62 des sekundären Systemdruckventils 37 ist auf der einen Seite mit der zweiten Ventiltasche 46 verbunden. Auf der anderen Seite ist der Ausgang 62 mit der Leitung 39 verbunden, die zu der Pumpensaugseite 40 führt, d.h. die Leitung 39 führt zu einem Eingang 59 des Pumpensystems 5. Über diesen Eingang 59 kann sowohl der Primärpumpe 6 als auch der Sekundärpumpe 7 zusätzlich Öl zugeführt werden. In den durch Fig. 2 bis 5 gezeigten Betriebszuständen des Hydrauliksystems 4 befindet sich die sekundäre Kolbenstange 41 des sekundären Systemdruckventils 37 in der Ausgangsstellung. Der Kolben 42 der sekundären Kolbenstange 41 verschließt in der Ausgangsstellung der sekundären Kolbenstange 41 die mögliche Verbindung zwischen der ersten Ventiltasche 45 und der zweiten Ventiltasche 46 über die Steuerkante 48. Somit besteht auch keine Verbindung zwischen dem zweiten Eingang 57 und dem Ausgang 62. Folglich kann kein Öl aus dem sekundären Systemdruckkreis 18 über den zweiten Eingang 57, die erste Ventiltasche 45, die zweite Ventiltasche 46 und den Ausgang 62 in die Leitung 39 fließen und dem Eingang 59 des Pumpensystems 5 zugeführt werden.

Ausgehend von dem Betriebszustand des Hydrauliksystems 4 gemäß Fig. 5 wird die Drehzahl des Pumpensystems 5 weiter erhöht, bis die Fördermenge bzw. die primäre Ölflut der Primärpumpe 6 ausreicht, damit die Primärpumpe 6 allein den primären Systemdruckkreis 16 sättigen kann, d.h. das Soll-Druckniveau innerhalb des primären Systemdruckkreises 16 allein aufrechterhalten kann (primärer Sättigungszustand). Wenn dieser primäre Sättigungszustand erreicht ist, wird die Fördermenge bzw. die sekundäre Ölflut der Sekundärpumpe 7 nicht länger benötigt, um den primären Systemdruckkreis 16 zu sättigen. In dem primären Sättigungszustand wird die Kolbenstange 11 durch die Verstellkraft soweit in Richtung der ersten Stirnseite S1 des primären Systemdruckventils 9 verstellt, bis sich die Kolbenstange 11 in einer dritten Schaltstellung gemäß Fig. 6 befindet.

In dem durch Fig. 6 gezeigten vierten Betriebszustand des Hydrauliksystems 4 wurden die Drehzahl der Primärpumpe 6 und der Sekundärpumpe 7 weiter erhöht (im Vergleich zu dem Betriebszustand des Hydrauliksystems 4 nach Fig. 5). Dadurch ist die Fördermenge der Primärpumpe 6 und der Sekundärpumpe 7 angestiegen. Ebenfalls ist der innerhalb des primären Systemdruckkreises 16 herrschende Druck und die Verstellkraft angestiegen, die auf die hydraulisch wirksame Stirnfläche 33 der Kolbenstange 11 des primären Systemdruckventils 9 wirkt. Somit hat sich die Kolbenstange 11 weiter in Richtung der ersten Stirnseite S1 des primären Systemdruckventils 9 bewegt. Dadurch hat sich die Verbindung zwischen der zweiten Ventiltasche 17 und der dritten Ventiltasche 25 über die sekundäre Steuerkante 35 erweitert.

In der durch Fig. 6 gezeigten dritten Schaltstellung der Kolbenstange 11 liegt die radial äußere Oberfläche 30 des Kolbens 31 nicht länger an dem ersten Abschnitt 27 der Führungsfläche an. Somit gibt der Kolben 31 die Verbindung zwischen der ersten Ventiltasche 14 und der dritten Ventiltasche 25 über die primäre Steuerkante 36 frei (Regelung auf primärer Steuerkante 36). Sobald sich die Kolbenstange 11 in der dritten Schaltstellung befindet, regelt das primäre Systemdruckventil 9 über die primäre Steuerkante 36 und nicht mehr über die sekundäre Steuerkante 35. Die Verbindung zwischen der zweiten Ventiltasche 17 und der dritten Ventiltasche 25 über die sekundäre Steuerkante 35 bleibt weiterhin bestehen, so dass nunmehr die überschüssige Fördermenge bzw. primäre Ölflut der Primärpumpe 6 und die Fördermenge bzw. sekundäre Ölflut der Sekundärpumpe 7 in der dritten Ventiltasche 25 zusammengeführt und in den sekundären Systemdruckkreis 18 zu dessen Druckerhöhung geleitet werden.

Mit anderen Worten kann nun ein überschüssiger Anteil der durch die Primärpumpe 6 erzeugten primären Ölflut, die nicht zur Aufrechterhaltung des Soll-Druckniveaus innerhalb des primären Systemdruckkreises 16 benötigt wird, über die erste Ventiltasche 14, die dritte Ventiltasche 25 und den dritten Ausgang 65 des primären Systemdruckventils 9 in den sekundären Systemdruckkreis 18 geleitet werden.

Weiterhin fällt in der dritten Schaltstellung der Kolbenstange 11 zunächst der Druck in der durch die Sekundärpumpe 7 gelieferten sekundären Ölflut, weil sich der Querschnitt an der sekundären Steuerkante 35 vergrößert. Durch den Druckabfall entsteht an dem zweiten Rückhalteventil 19 ein Kräfteungleichgewicht. Auf der Seite des primären Systemdruckkreises 16 liegt das Soll-Druckniveau des primären Systemdruckkreises 16 vor. Auf der Seite des primären Systemdruckventils 9 ist der Druck aufgrund des vorstehend beschriebenen Druckabfalls geringer. Dadurch schließt das zweite Rückhalteventil 19. Somit sind der primäre Systemdruckkreis 16 und der sekundäre Systemdruckkreis 18 voneinander getrennt. Die Sekundärpumpe 7 speist nun nur noch Öl in den sekundären Systemdruckkreis 18. Erst nachdem der vorstehend beschriebene Druckabfall eingetreten ist, wird der Druck in der Sekundärpumpe 7 abgesenkt.

In dem durch Fig. 6 gezeigten vierten Betriebszustand des Hydrauliksystems 4 werden die Drehzahl der Primärpumpe 6 und der Sekundärpumpe 7 weiter erhöht (im Vergleich zu dem Betriebszustand des Hydrauliksystems nach Fig. 5). Dadurch steigen die Fördermengen der Primärpumpe 6 und der Sekundärpumpe 7. Ebenfalls steigen der innerhalb des sekundären Systemdruckkreises 18 herrschende Druck und die Verstellkraft, die auf die hydraulisch wirksame Stirnfläche 61 der sekundären Kolbenstange 41 des sekundären Systemdruckventils 37 wirkt.

Dies setzt sich fort bis der sekundäre Systemdruckkreis 18 gesättigt ist, d.h. bis das Soll-Druckniveau innerhalb des sekundären Systemdruckkreises 16 erreicht ist (sekundärer Sättigungszustand). Ab Erreichen des sekundären Sättigungszustands bewegt sich die sekundäre Kolbenstange 41 aufgrund des nunmehr vorherrschenden Kräfteungleichgewichts in Richtung der ersten Stirnseite 49 des sekundären Systemdruckventils 9, bis sich die sekundäre Kolbenstange 41 in der durch Fig. 6 und 7 gezeigten Öffnungsstellung befindet, in welcher die Verbindung zwischen der ersten Ventiltasche 45 und der zweiten Ventiltasche 46 über die Steuerkante 48 freigegeben wird. Das sekundäre Systemdruckventil 37 kommt in Regelung. Nun kann eine überschüssige Ölmenge (d.h. eine Ölmenge, die nicht zur Sättigung des sekundären Systemdruckkreises 18 benötigt wird) aus dem sekundären Systemdruckkreis 18 über den zweiten Eingang 57, die erste Ventiltasche 45, die zweite Ventiltasche 46 und den Ausgang 62 des sekundären Systemdruckventils 37 in die Leitung 39 gefördert werden, und von da aus der Pumpensaugseite 40 zugeführt werden.

Fig. 8 zeigt eine alternative Ausführungsform eines primären, erfindungsgemäßen Systemdruckventils 9 für das Hydrauliksystem nach Fig. 2. Eine Druckrückführung ist bei diesem primären Systemdruckventil 9 über eine interne Rückführfläche 66 umgesetzt, wodurch das primäre Systemdruckventil 9 nach Fig. 8 gegenüber dem primären Systemdruckventil 9 nach Fig. 2 verkürzt ausgeführt werden kann. Die Kolbenstange 11 umfasst in dem Ausführungsbeispiel nach Fig. 2 und in dem Ausführungsbeispiel nach Fig. 8 einen dritten Kolben 67, der mit Abstand zu dem zweiten Kolben 31 weiter in Richtung der zweiten Stirnseite S2 des primären Systemdruckventils 9 angeordnet ist. Der Durchmesser des dritten Kolbens 67 ist in dem Ausführungsbeispiel nach Fig. 8 kleiner als der Durchmesser des zweiten Kolbens 31.

Der dritte Kolben 67 nach Fig. 8 kann in axialer Richtung L des primären Systemdruckventils 9 in einem an den verringerten Durchmesser des dritten Kolbens 67 angepassten dritten Abschnitt 68 der Führungsfläche 26 hin und her verstellt werden. Der dritte Kolben 67 weist eine hydraulisch wirksame Fläche 69 auf (in dem gezeigten Ausführungsbeispiel eine Ringfläche), die kleiner ist als die Rückführfläche 66.

Die durch die Primärpumpe 6 erzeugte primäre Ölflut kann über den ersten Eingang 8 in die erste Ventiltasche 14 des primären Systemdruckventils 9 gelangen. Die erste Ventiltasche 14 kann mittels der primären Ölflut geflutet werden und mittels der primären Ölflut kann ein Druck innerhalb der ersten Ventiltasche 14 aufgebaut werden. Je nachdem, in welchem der vorstehend im Zusammenhang mit den Fig. 2 bis 6 beschriebenen Betriebszuständen sich das Hydrauliksystem 4 befindet, ist dieser Druck innerhalb der ersten Ventiltasche 14 unterschiedlich hoch.

Der Druck innerhalb der ersten Ventiltasche 14 wirkt sowohl auf die hydraulisch wirksame Fläche 69 des dritten Kolbens 67 als auch auf die Rückführfläche 66 des zweiten Kolbens 31. Da die hydraulisch wirksame Fläche 69 des dritten Kolbens 67 kleiner ist als die Rückführfläche 66 des zweiten Kolbens 31, ruft der Druck innerhalb der ersten Ventiltasche 14 eine Verstellkraft hervor, die der weiter oben beschriebenen Federkraft der Feder und der Vorsteuerkraft entgegenwirkt. Die Ausführungsform nach Fig. 8 ermöglicht, das eine in dem Ausführungsbeispiel nach Fig. 2 enthaltene sechste Ventiltasche 70 eingespart werden kann.

### Bezuqszeichen

- Fi: Ölfilter
- L: axiale Richtung eines primären Systemdruckventils
- r: radiale Richtung des primären Systemdruckventils
- S1: erste Stirnseite des primären Systemdruckventils
- S2: zweite Stirnseite des primären Systemdruckventils
- 1: Kraftfahrzeug
- 2: Verbrennungskraftmotor
- 3: Automatikgetriebe
- 4: Hydrauliksystem
- 5: Pumpensystem
- 6: Primärpumpe
- 7: Sekundärpumpe
- 8: erster Eingang des Systemdruckventils
- 9: primäres Systemdruckventil
- 10: zweiter Eingang des Systemdruckventils
- 11: Kolbenstange des Systemdruckventils
- 12: Feder
- 13: Ölsumpf
- 14: erste Ventiltasche des Systemdruckventils
- 15: erstes Rückhalteventil
- 16: primärer Systemdruckkreis
- 17: zweite Ventiltasche des Systemdruckventils
- 18: sekundärer Systemdruckkreis
- 19: zweites Rückhalteventil
- 20: Systemdruckregler
- 21: hydraulisch wirksame, innere Kreisfläche eines topfförmigen Kolbens
- 22: topfförmiger Kolben des primären Systemdruckventils
- 23: variabel einstellbares, elektrisches Drucksteuerventil
- 24: Magnetspule
- 25: dritte Ventiltasche des Systemdruckventils
- 26: innere Führungsfläche für die Kolbenstange
- 27: erster Abschnitt der Führungsfläche
- 28: zweiter Abschnitt der Führungsfläche
- 29: radial äußere Oberfläche des topfförmigen Kolbens
- 30: radial äußere Oberfläche eines zweiten Kolbens
- 31: zweiter Kolben des primären Systemdruckventils
- 32: vierte Ventiltasche des Systemdruckventils
- 33: hydraulisch wirksame Stirnfläche der Kolbenstange
- 34: erste Drossel
- 35: sekundäre Steuerkante
- 36: primäre Steuerkante
- 37: sekundäres Systemdruckventil
- 38: zweite Feder
- 39: Leitung
- 40: Pumpensaugseite
- 41: sekundäre Kolbenstange
- 42: sekundärer Kolben
- 43: sekundärer Ventilkörper
- 44: sekundäre Führungsfläche für die sekundäre Kolbenstange
- 45: erste Ventiltasche
- 46: zweite Ventiltasche
- 47: Abschnitt der sekundären Führungsfläche
- 48: Steuerkante des sekundären Ventilkörpers
- 49: erste Stirnseite des sekundären Systemdruckventils
- 50: topfförmiger Kolben des sekundären Systemdruckventils
- 51: hydraulisch wirksame, innere Kreisfläche des topfförmigen Kolbens
- 52: zweite Stirnseite des sekundären Systemdruckventils
- 53: erster Eingang des sekundären Systemdruckventils
- 54: zweite Drossel
- 55: dritte Ventiltasche
- 56: Innenraum des topfförmigen Kolbens
- 57: zweiter Eingang des sekundären Systemdruckventils
- 58: dritter Eingang des sekundären Systemdruckventils
- 59: dritte Drossel
- 60: vierte Ventiltasche
- 61: hydraulische wirksame Stirnfläche der sekundären Kolbenstange
- 62: Ausgang des sekundären Systemdruckventils
- 63: Eingang des Pumpensystems
- 64: dritter Eingang des primären Systemdruckventils
- 65: dritter Ausgang des primären Systemdruckventils
- 66: Ringfläche des zweiten Kolbens des primären Systemdruckventils
- 67: dritter Kolben
- 68: dritter Abschnitt der Führungsfläche des primären Systemdruckventils
- 69: hydraulisch wirksame Fläche des dritten Kolbens
- 70: sechste Ventiltasche des primären Systemdruckventils
- 71: Ventilgehäuse
- 72: erster Ausgang des primären Systemdruckventils
- 73: zweiter Ausgang des primären Systemdruckventils
- 74: vierter Eingang des primären Systemdruckventils
- 75: fünfte Ventiltasche des primären Systemdruckventils
- 76: Innenraum des topfförmigen Kolbens des primären Systemdruckventils

## Patentansprüche

1. Systemdruckventil (9) für ein Hydrauliksystem (4) eines Kraftfahrzeug-Getriebes (3), das Systemdruckventil (9) umfassend:
- ein Ventilgehäuse (71),
- eine Kolbenstange (11),
- einen ersten Eingang (8),
- einen zweiten Eingang (10),
- einen ersten Ausgang (72),
- einen zweiten Ausgang (73),
- einen dritten Ausgang (65), wobei
- eine Primärpumpe (6) des Hydrauliksystems (4) mit dem ersten Eingang (8) verbunden werden kann,
- eine Sekundärpumpe (7) des Hydrauliksystems (4) mit dem zweiten Eingang (10) verbunden werden kann,
- ein primärer Systemdruckkreis (16) des Hydrauliksystems (4) mit dem ersten Ausgang (72) und mit dem zweiten Ausgang (73) verbunden werden kann, und
- ein sekundärer Systemdruckkreis (18) des Hydrauliksystems (4) mit dem dritten Ausgang (65) verbunden werden kann,
wobei das Systemdruckventil (9) dazu eingerichtet ist, die Kolbenstange (11) innerhalb des Ventilgehäuses (71) in eine erste Schaltstellung und in eine zweite Schaltstellung zu verstellen,
wobei in der ersten Schaltstellung der dritte Ausgang (65) weder mit dem ersten Eingang (8) noch mit dem zweiten Eingang (10) verbunden ist,
wobei in der zweiten Schaltstellung der zweite Eingang (10) mit dem dritten Ausgang (65) verbunden ist, **dadurch gekennzeichnet, dass**
das Systemdruckventil (9) ferner dazu eingerichtet ist, die Kolbenstange (11) innerhalb des Ventilgehäuses (71) in eine dritte Schaltstellung zu verstellen,
wobei in der dritten Schaltstellung der dritte Ausgang (65) sowohl mit dem ersten Eingang (8) als auch mit dem zweiten Eingang (10) verbunden ist.

2. Systemdruckventil (9) nach Anspruch 1, wobei die Kolbenstange (11) mittels eines Rückstellelements (12) in der ersten Schaltstellung vorgespannt ist.

3. Systemdruckventil (9) nach Anspruch 1 oder 2, wobei das Systemdruckventil (9) dazu eingerichtet ist, eine Stirnfläche (33) der Kolbenstange (11) mit einem hydraulischen Druck zu beaufschlagen, so dass sich die Kolbenstange (11) in die zweite Schaltstellung oder in die dritte Schaltstellung bewegt.

4. Systemdruckventil (9) nach einem der vorstehenden Ansprüche, wobei das Systemdruckventil (9) dazu eingerichtet ist, eine interne Rückführfläche (66) eines Kolbens (31) der Kolbenstange (11) mit einem hydraulischen Druck zu beaufschlagen, so dass sich die Kolbenstange (11) in die zweite Schaltstellung oder in die dritte Schaltstellung bewegt.

5. Systemdruckventil (9) nach einem der vorstehenden Ansprüche, wobei das Systemdruckventil (9) durch Belasten der Kolbenstange (11) mit einem hydraulischen Druck dazu eingerichtet ist, die Kolbenstange (11) innerhalb des Ventilgehäuses (71) aus der ersten Schaltstellung in die zweite Schaltstellung zu verstellen, sobald der hydraulische Druck einen ersten Grenzwert überschreitet.

6. Systemdruckventil (9) nach Anspruch 5, wobei das Systemdruckventil (9) durch Belasten der Kolbenstange (11) mit einem hydraulischen Druck dazu eingerichtet ist, die Kolbenstange (11) innerhalb des Ventilgehäuses (71) aus der zweiten Schaltstellung in die dritte Schaltstellung zu verstellen, sobald der hydraulische Druck einen zweiten Grenzwert überschreitet, wobei der zweite Grenzwert höher ist als der erste Grenzwert.

7. Systemdruckventil (9) nach einem der vorstehenden Ansprüche, das Systemdruckventil (9) weiterhin umfassend
- eine erste Ventiltasche (14), die mit dem ersten Eingang (8) und mit dem ersten Ausgang (72) verbunden ist,
- eine zweite Ventiltasche (17), die mit dem zweiten Eingang (10) und mit dem zweiten Ausgang (73) verbunden ist,
- eine dritte Ventiltasche (25), die mit dem dritten Ausgang (65) verbunden ist, wobei die Kolbenstange (11)
- in der ersten Schaltstellung die erste Ventiltasche (14) und die zweite Ventiltasche (17) von der dritten Ventiltasche (25) trennt,
- in der zweiten Schaltstellung eine Verbindung der zweiten Ventiltasche (17) mit der dritten Ventiltasche (25) freigibt, und
- in der dritten Schaltstellung eine Verbindung zwischen der ersten Ventiltasche (14) und der dritten Ventiltasche (25) sowie eine Verbindung zwischen der zweiten Ventiltasche (17) und der dritten Ventiltasche (25) freigibt.

8. Systemdruckventil (9) nach Anspruch 7, die erste Kolbenstange umfassend
- einen Kolben (31) mit einer primären Steuerkante (36),
- einen weiteren Kolben (22) mit einer sekundären Steuerkante (35),
wobei die Kolbenstange (11) dazu eingerichtet ist,
- die Verbindung zwischen der zweiten Ventiltasche (17) und der dritten Ventiltasche (25) über die sekundäre Steuerkante (35) freizugeben, und
- die Verbindung zwischen der ersten Ventiltasche (14) und der dritten Ventiltasche (25) über die primäre Steuerkante (36) freizugeben.

9. Hydrauliksystem (4) für ein Kraftfahrzeug-Getriebe (3), insbesondere ein Automatikgetriebe (3), das Hydrauliksystem (4) umfassend:
- eine Primärpumpe (6),
- eine Sekundärpumpe (7),
- einen primären Systemdruckkreis (16),
- einen sekundären Systemdruckkreis (18), und
- ein primäres Systemdruckventil (9) nach einem der vorstehenden Ansprüche, wobei
- die Primärpumpe (6) mit dem ersten Eingang (8) des primären Systemdruckventils (9) verbunden ist,
- die Sekundärpumpe (7) mit dem zweiten Eingang (10) des primären Systemdruckventils (9) verbunden ist,
- der primäre Systemdruckkreis (16) mit dem ersten Ausgang (72) und mit dem zweiten Ausgang (73) des primären Systemdruckventils (9) verbunden ist, und
- der sekundäre Systemdruckkreis (18) mit dem dritten Ausgang (65) des primären Systemdruckventils (9) verbunden ist.

10. Hydrauliksystem (4) nach Anspruch 9, das Hydrauliksystem (4) weiterhin umfassend einen Systemdruckregler (20), welcher dazu eingerichtet ist, einen Vorsteuerdruck auszugeben, der dem primären Systemdruckventil (9) zugeführt werden kann, so dass eine Vorspannkraft des Rückstellelements (12) unterstützt wird.

11. Hydrauliksystem (4) nach Anspruch 9 oder 10, das Hydrauliksystem (4) weiterhin umfassend ein weiteres Systemdruckventil (37), wobei das weitere Systemdruckventil (37) dazu eingerichtet ist, einen Systemdruck innerhalb des sekundären Systemdruckkreises (18) vorzugeben und einzustellen sowie bei einer Überschreitung des vorgegebenen Systemdrucks, den sekundären Systemdruckkreis (18) mit einer Ansaugseite (40) der Primärpumpe (6) und der Sekundärpumpe (7) zu verbinden.

12. Kraftfahrzeug-Getriebe (3), insbesondere ein Kraftfahrzeug-Automatikgetriebe (3), umfassend ein Hydrauliksystem (4) nach einem der Ansprüche 9 bis 11.

13. Kraftfahrzeug (1) umfassend ein Kraftfahrzeug-Getriebe (3) nach Anspruch 12.

## Claims

1. System-pressure valve (9) for a hydraulic system (4) of a motor-vehicle transmission (3), the system-pressure valve (9) comprising:
- a valve housing (71),
- a piston rod (11),
- a first inlet (8),
- a second inlet (10),
- a first outlet (72),
- a second outlet (73),
- a third outlet (65),
wherein
- a primary pump (6) of the hydraulic system (4) can be connected to the first inlet (8),
- a secondary pump (7) of the hydraulic system (4) can be connected to the second inlet (10),
- a primary system-pressure circuit (16) of the hydraulic system (4) can be connected to the first outlet (72) and to the second outlet (73), and
- a secondary system-pressure circuit (18) of the hydraulic system (4) can be connected to the third outlet (65),
wherein the system-pressure valve (9) is configured to adjust the piston rod (11) within the valve housing (71) into a first switching position and into a second switching position,
wherein, in the first switching position, the third outlet (65) is connected neither to the first inlet (8) nor to the second inlet (10),
wherein, in the second switching position, the second inlet (10) is connected to the third outlet (65),
**characterized in that**
the system-pressure valve (9) is furthermore configured to adjust the piston rod (11) within the valve housing (71) into a third switching position,
wherein, in the third switching position, the third outlet (65) is connected both to the first inlet (8) and to the second inlet (10).

2. System-pressure valve (9) according to Claim 1, wherein the piston rod (11) is preloaded in the first switching position by means of a restoring element (12).

3. System-pressure valve (9) according to Claim 1 or 2, wherein the system-pressure valve (9) is configured to apply a hydraulic pressure to an end face (33) of the piston rod (11) such that the piston rod (11) moves into the second switching position or into the third switching position.

4. System-pressure valve (9) according to one of the preceding claims, wherein the system-pressure valve (9) is configured to apply a hydraulic pressure to an internal return surface (66) of a piston (31) of the piston rod (11) such that the piston rod (11) moves into the second switching position or into the third switching position.

5. System-pressure valve (9) according to one of the preceding claims, wherein the system-pressure valve (9) is configured to, by way of application of a hydraulic pressure to the piston rod (11), adjust the piston rod (11) within the valve housing (71) from the first switching position into the second switching position as soon as the hydraulic pressure exceeds a first limit value.

6. System-pressure valve (9) according to Claim 5, wherein the system-pressure valve (9) is configured to, by way of application of a hydraulic pressure to the piston rod (11), adjust the piston rod (11) within the valve housing (71) from the second switching position into the third switching position as soon as the hydraulic pressure exceeds a second limit value, wherein the second limit value is higher than the first limit value.

7. System-pressure valve (9) according to one of the preceding claims, the system-pressure valve (9) furthermore comprising
- a first valve pocket (14), which is connected to the first inlet (8) and to the first outlet (72),
- a second valve pocket (17), which is connected to the second inlet (10) and to the second outlet (73),
- a third valve pocket (25), which is connected to the third outlet (65),
wherein the piston rod (11),
- in the first switching position, separates the first valve pocket (14) and the second valve pocket (17) from the third valve pocket (25),
- in the second switching position, opens up a connection of the second valve pocket (17) to the third valve pocket (25) and,
- in the third switching position, opens up a connection between the first valve pocket (14) and the third valve pocket (25) and a connection between the second valve pocket (17) and the third valve pocket (25).

8. System-pressure valve (9) according to Claim 7, the first piston rod comprising
- a piston (31) with a primary control edge (36),
- a further piston (22) with a secondary control edge (35),
wherein the piston rod (11) is configured
- to open up the connection between the second valve pocket (17) and the third valve pocket (25) via the secondary control edge (35), and
- to open up the connection between the first valve pocket (14) and the third valve pocket (25) via the primary control edge (36).

9. Hydraulic system (4) for a motor-vehicle transmission (3), in particular an automatic transmission (3), the hydraulic system (4) comprising:
- a primary pump (6),
- a secondary pump (7),
- a primary system-pressure circuit (16),
- a secondary system-pressure circuit (18), and
- a primary system-pressure valve (9) according to one of the preceding claims,
wherein
- the primary pump (6) is connected to the first inlet (8) of the primary system-pressure valve (9),
- the secondary pump (7) is connected to the second inlet (10) of the primary system-pressure valve (9),
- the primary system-pressure circuit (16) is connected to the first outlet (72) and to the second outlet (73) of the primary system-pressure valve (9), and
- the secondary system-pressure circuit (18) is connected to the third outlet (65) of the primary system-pressure valve (9).

10. Hydraulic system (4) according to Claim 9, the hydraulic system (4) furthermore comprising a system-pressure regulator (20), which is configured to output a pilot pressure which can be fed to the primary system-pressure valve (9) such that a preload force of the restoring element (12) is assisted.

11. Hydraulic system (4) according to Claim 9 or 10, the hydraulic system (4) furthermore comprising a further system-pressure valve (37), wherein the further system-pressure valve (37) is configured to predefine and to set a system pressure within the secondary system-pressure circuit (18), and to connect the secondary system-pressure circuit (18) to an intake side (40) of the primary pump (6) and the secondary pump (7) if the predefined system pressure is exceeded.

12. Motor-vehicle transmission (3), in particular a motor-vehicle automatic transmission (3), comprising a hydraulic system (4) according to one of Claims 9 to 11.

13. Motor vehicle (1) comprising a motor-vehicle transmission (3) according to Claim 12.

## Revendications

1. Soupape de pression de système (9) pour un système hydraulique (4) d'une transmission de véhicule automobile (3), la soupape de pression de système (9) comprenant :
- un corps de soupape (71),
- une tige de piston (11),
- une première entrée (8),
- une deuxième entrée (10),
- une première sortie (72),
- une deuxième sortie (73),
- une troisième sortie (65),
- une pompe primaire (6) du système hydraulique (4) pouvant être reliée à la première entrée (8),
- une pompe secondaire (7) du système hydraulique (4) pouvant être reliée à la deuxième entrée (10),
- un circuit de pression de système primaire (16) du système hydraulique (4) pouvant être relié à la première sortie (72) et à la deuxième sortie (73), et
- un circuit de pression de système secondaire (18) du système hydraulique (4) pouvant être relié à la troisième sortie (65),
la soupape de pression de système (9) étant adaptée pour déplacer la tige de piston (11) à l'intérieur du corps de soupape (71) dans une première position de commutation et dans une deuxième position de commutation,
dans la première position de commutation, la troisième sortie (65) n'étant reliée ni à la première entrée (8) ni à la deuxième entrée (10),
dans la deuxième position de commutation, la deuxième entrée (10) étant reliée à la troisième sortie (65), **caractérisée en ce que**
la soupape de pression de système (9) est en outre adaptée pour déplacer la tige de piston (11) à l'intérieur du corps de soupape (71) dans une troisième position de commutation,
dans la troisième position de commutation, la troisième sortie (65) étant reliée à la fois à la première entrée (8) et à la deuxième entrée (10).

2. Soupape de pression de système (9) selon la revendication 1, la tige de piston (11) étant précontrainte dans la première position de commutation au moyen d'un élément de rappel (12).

3. Soupape de pression de système (9) selon la revendication 1 ou 2, la soupape de pression de système (9) étant adaptée pour solliciter une surface frontale (33) de la tige de piston (11) avec une pression hydraulique, de telle sorte que la tige de piston (11) se déplace dans la deuxième position de commutation ou dans la troisième position de commutation.

4. Soupape de pression de système (9) selon l'une quelconque des revendications précédentes, la soupape de pression de système (9) étant adaptée pour solliciter une surface de retour interne (66) d'un piston (31) de la tige de piston (11) avec une pression hydraulique, de telle sorte que la tige de piston (11) se déplace dans la deuxième position de commutation ou dans la troisième position de commutation.

5. Soupape de pression de système (9) selon l'une quelconque des revendications précédentes, la soupape de pression de système (9) étant adaptée, par chargement de la tige de piston (11) avec une pression hydraulique, pour déplacer la tige de piston (11) à l'intérieur du corps de soupape (71) de la première position de commutation dans la deuxième position de commutation, dès que la pression hydraulique dépasse une première valeur limite.

6. Soupape de pression de système (9) selon la revendication 5, la soupape de pression de système (9) étant adaptée, par chargement de la tige de piston (11) avec une pression hydraulique, pour déplacer la tige de piston (11) à l'intérieur du corps de soupape (71) de la deuxième position de commutation dans la troisième position de commutation, dès que la pression hydraulique dépasse une deuxième valeur limite, la deuxième valeur limite étant supérieure à la première valeur limite.

7. Soupape de pression de système (9) selon l'une quelconque des revendications précédentes, la soupape de pression de système (9) comprenant en outre
- une première poche de soupape (14), qui est reliée à la première entrée (8) et à la première sortie (72),
- une deuxième poche de soupape (17), qui est reliée à la deuxième entrée (10) et à la deuxième sortie (73),
- une troisième poche de soupape (25), qui est reliée à la troisième sortie (65),
la tige de piston (11)
- dans la première position de commutation, séparant la première poche de soupape (14) et la deuxième poche de soupape (17) de la troisième poche de soupape (25),
- dans la deuxième position de commutation, libérant une liaison de la deuxième poche de soupape (17) avec la troisième poche de soupape (25), et
- dans la troisième position de commutation, libérant une liaison entre la première poche de soupape (14) et la troisième poche de soupape (25) ainsi qu'une liaison entre la deuxième poche de soupape (17) et la troisième poche de soupape (25).

8. Soupape de pression de système (9) selon la revendication 7, la première tige de piston comprenant
- un piston (31) avec un bord de commande primaire (36),
- un autre piston (22) avec un bord de commande secondaire (35),
la tige de piston (11) étant adaptée pour
- libérer la liaison entre la deuxième poche de soupape (17) et la troisième poche de soupape (25) par l'intermédiaire du bord de commande secondaire (35), et
- libérer la liaison entre la première poche de soupape (14) et la troisième poche de soupape (25) par l'intermédiaire du bord de commande primaire (36).

9. Système hydraulique (4) pour une transmission de véhicule automobile (3), notamment une transmission automatique (3), le système hydraulique (4) comprenant :
- une pompe primaire (6),
- une pompe secondaire (7),
- un circuit de pression de système primaire (16),
- un circuit de pression de système secondaire (18), et
- une soupape de pression de système primaire (9) selon l'une quelconque des revendications précédentes,
- la pompe primaire (6) étant reliée à la première entrée (8) de la soupape de pression de système primaire (9),
- la pompe secondaire (7) étant reliée à la deuxième entrée (10) de la soupape de pression de système primaire (9),
- le circuit de pression de système primaire (16) étant relié à la première sortie (72) et à la deuxième sortie (73) de la soupape de pression de système primaire (9), et
- le circuit de pression de système secondaire (18) étant relié à la troisième sortie (65) de la soupape de pression de système primaire (9).

10. Système hydraulique (4) selon la revendication 9, le système hydraulique (4) comprenant en outre un régulateur de pression de système (20) qui est adapté pour émettre une pression de pilotage qui peut être fournie à la soupape de pression de système primaire (9) de telle sorte qu'une force de précontrainte de l'élément de rappel (12) est soutenue.

11. Système hydraulique (4) selon la revendication 9 ou 10, le système hydraulique (4) comprenant en outre une autre soupape de pression de système (37), l'autre soupape de pression de système (37) étant adaptée pour définir et régler une pression de système à l'intérieur du circuit de pression de système secondaire (18) et, en cas de dépassement de la pression de système définie, pour relier le circuit de pression de système secondaire (18) à un côté d'aspiration (40) de la pompe primaire (6) et de la pompe secondaire (7).

12. Transmission (3) de véhicule automobile, notamment transmission automatique (3) de véhicule automobile, comprenant un système hydraulique (4) selon l'une quelconque des revendications 9 à 11.

13. Véhicule automobile (1) comprenant une transmission (3) de véhicule automobile selon la revendication 12.
